# EUROPEAN PATENT SPECIFICATION

(11) **EP 2 517 573 B1**
(45) Date of publication and mention of the grant of the patent: **18.03.2015**
(21) Application number: 10839604.5
(22) Date of filing: 17.12.2010
(51) Int. Cl.: A23L 1/22, A23L 1/226, A23L 1/231

(54) **FLAVOR-IMPROVING MATERIAL**
GESCHMACKSVERBESSERNDES MATERIAL
AROMATISANT

(30) Priority: 21.12.2009 JP 2009289510
(43) Date of publication of application: 31.10.2012
(73) Proprietor: Ajinomoto Co., Inc., Tokyo 104-8315 (JP)
(72) Inventor: OSANAI, Hiroki, Kawasaki-shi Kanagawa 210-8681 (JP); TAKAKURA, Yukiko, Kawasaki-shi Kanagawa 210-8681 (JP)
(74) Representative: Strehl, Peter
(86) International application number: PCT/JP2010/073488
(87) International publication number: WO 2011/078376

(56) References cited:
- WO-A1-2009/011598
- JP-A- 5 316 959
- JP-A- 2005 015 683
- JP-A- 2006 124 490
- JP-A- 2008 263 902
- JP-A- 2008 263 903

## Description

### [Technical Field]

The present invention relates to a method for imparting an aroma and/or a flavor to a food product.

### [Background Art]

A meat soup stock, including a Chinese soup called "tang" as well as those employed in a western style cuisine such as pork bouillons, chicken bouillons and beef bouillons, serves as a base for a prepared food. However, a commercially available meat extract tends to undergo a deterioration due to a heating during the manufacturing process, and a seasoning having a flavor inherent to the meat is desired to be developed.

Analyses of meat flavors are found in several literatures (Non-patent literature 1, Non-patent literature 2, Non-patent literature 3, Non-patent literature 4).

### [Citation List]

### [Non-patent literature]

[Non-patent literature 1] Volatile compounds on the surface and within Iberian dry-cured loin. Muriel, Elena, Antequera, Teresa, Petron, Maria Jesus, Martin, Diana, Ruiz, Jorge, European Food Research and Technology (2004), 219 (5), 445-451.
[Non-patent literature 2] Comparison of simultaneous distillation extraction (SDE) and solid-phase microextraction (SPME) for the analysis of volatile compounds in dry-cured ham. Garcia-Esteban, Marta, Ansorena, Diana, Astiasaran, Iciar, Martin, Diana, Ruiz, Jorge. Bromatologia, Journal of the Science of Food and Agriculture (2004), 84(11), 1364-1370.
[Non-patent literature 3] SDE-GC-MS profiling of short- and long-term ripened fermented sausages. Dirinck, P., Van Opstaele, Ghent, Belg., "Food Flavors and Chemistry : Advances of the New Millennium", Royal Society of Chemistry (2001)
[Non-patent literature 4] Volatile components of roasted chicken fat. I. Noleau, B. Toulemonde, Lebensm-Wiss. u.-Technol., 20, 37-41 (1987)

### [Summary of Invention]

### [Technical Problem]

However, Non-patent literature 1 relates to an analysis of a Iberian swine meat salt-preserved loin, including the description of 100 or more components and the peak areas thereof, and a discussion of a difference between the inside and the outside of the meat such as the difference in the 2-methylpropanol content between the surface and the inside of a meat. Non-patent literature 1 also includes a description that the profile is similar basically to those of other processed meats or other type of dried sausages. Non-patent literature 2 also relates to an analysis of a salt-preserved ham and includes the description of 100 or more components and the peak areas thereof. Both of Non-patent literature 1 and Non-patent literature 2 lack the description not only of the concentrations of the respective components but also of the taste and the flavor.

Non-patent literature 3 relates to an analysis of a fermented sausage and includes the description of 100 or more flavor compounds and the concentrations thereof. Nevertheless, it is difficult in fact to reproduce these compounds precisely in accordance with the analyzed values. It is also understood that by using only a compound present at a high concentration the flavor cannot be reproduced. Non-patent literature 4 includes the description of 100 or more flavor compounds and the concentrations thereof. Nevertheless, it is difficult in fact to reproduce these compounds precisely in accordance with the analyzed values. It is also understood that by using only a compound present at a high concentration the flavor cannot be reproduce d. Non-patent literature 4 relates to a flavor composition extracted from an oil drip of a roasted chicken meat, and this flavor is assigned specifically to the fat aroma of the roasted chicken and did not include any description or suggestion of a flavor exhibiting a mellowness or a body inherent to a meat. In addition, even if a part of the reported compounds are incorporated in accordance with the analyzed values, it was not possible, due to a negligible effect or an excessively imparted aroma, to provide a favorable aroma and/or flavor which is a nature of a meat soup stock. Under the circumstance described above, an objective of the invention is to provide a food material capable of being used more widely and having a high aroma and flavor improving effect.

### [Solution to Problem]

As a result of an intensive study to solve the problems mentioned above, the present inventors established the present invention. The present invention includes the following embodiments:
1. A method for producing a beverage/food product having an improved meat aroma and/or flavor by adding (i) decanoic acid, (ii) octanoic acid and (iii) any one or more of acetol, furfural, methyltetrahydrofuranone and 2-acetyl-5-methylfuran, wherein when the amount of (i) the decanoic acid to be incorporated is A parts by weight, the amount of (ii) the octanoic acid to be incorporated is B parts by weight and the total amount of (iii) acetol, furfural, methyltetrahydrofuranone and 2-acetyl-5-methylfuran to be incorporated is C parts by weight and also when a calculation is made to give A+B+C=100, then the addition to the beverage/food product is conducted to give a formulation shown by any of the following (a), (b), (c), (d) and (e):
   (a) 0<A≤60, 0<B<100, 0<C<100, 3A+B≤180
   (b) 0<A≤60, 0<B≤90, 0<C<100, 3A+B≤180
   (c) 0<A≤50, 0<B≤50, 50≤C<100
   (d) 0<A≤40, 60≤B<100, 0<C≤40
   (e) 0<A≤40, 60≤B≤90, 0<C≤40.
2. The method wherein any one or more of tetradecanoic acid, hexadecanoic acid, octadecanoic acid and oleic acid are added.
3. The method wherein the total amount of (i) decanoic acid, (ii) octanoic acid, and (iii) any one or more of acetol, furfural, methyltetrahydrofuranone and 2-acetyl-5-methylfuran is 10 ppb or more and 1000 ppm or less.
4. A meat aroma and/or flavor imparting composition containing (i) decanoic acid, (ii) octanoic acid and (iii) any one or more of acetol, furfural, methyltetrahydrofuranone and 2-acetyl-5-methylfuran, wherein when the amount of (i) the decanoic acid to be incorporated is A parts by weight, the amount of (ii) the octanoic acid to be incorporated is B parts by weight and the total amount of (iii) acetol, furfural, methyltetrahydrofuranone and 2-acetyl-5-methylfuran to be incorporated is C parts by weight and
   also when a calculation is made to give A+B+C=100, then the addition to the beverage/food product is conducted to give a formulation shown by any of the following (a), (b), (c), (d) and (e):
   (a) 0<A≤60, 0<B<100, 0<C<100, 3A+B≤180
   (b) 0<A≤60, 0<B≤90, 0<C<100, 3A+B≤180
   (c) 0<A≤50, 0<B≤50, 50≤C<100
   (d) 0<A≤40, 60≤B<100, 0<C≤40
   (e) 0<A≤40, 60≤B≤90, 0<C≤40.
5. The composition wherein any one or more of tetradecanoic acid, hexadecanoic acid, octadecanoic acid and oleic acid are further contained.
6. A food product comprising a composition as above wherein the total amount of (i) decanoic acid, (ii) octanoic acid, and (iii) any one or more of acetol, furfural, methyltetrahydrofuranone and 2-acetyl-5-methylfuran is 10 ppb or more and 1000 ppm or less.
7. A method for improving a meat aroma and/or a flavor of a food product by adding the composition above wherein the total amount of (i) decanoic acid, (ii) octanoic acid, and (iii) any one or more of acetol, furfural, methyltetrahydrofuranone and 2-acetyl-5-methylfuran in the food product is 10 ppb or more and 1000 ppm or less.
8. A method for producing a food product having an improved aroma and/or flavor by adding the composition above wherein the total amount of (i) decanoic acid, (ii) octanoic acid, and (iii) any one or more of acetol, furfural, methyltetrahydrofuranone and 2-acetyl-5-methylfuran in the food product is 10 ppb or more and 1000 ppm or less.

The present invention also encompasses a combination of any of these respective aspects as well as the representation of the invention involving any replacement between the methods, the devices and the like.

### [Advantageous Effects of Invention]

According to the invention, a method for imparting an aroma and/or a flavor, especially a meat soup stock-like aroma and/or flavor to a food product is provided.

### [Brief Description of Drawings]

[Figure 1]

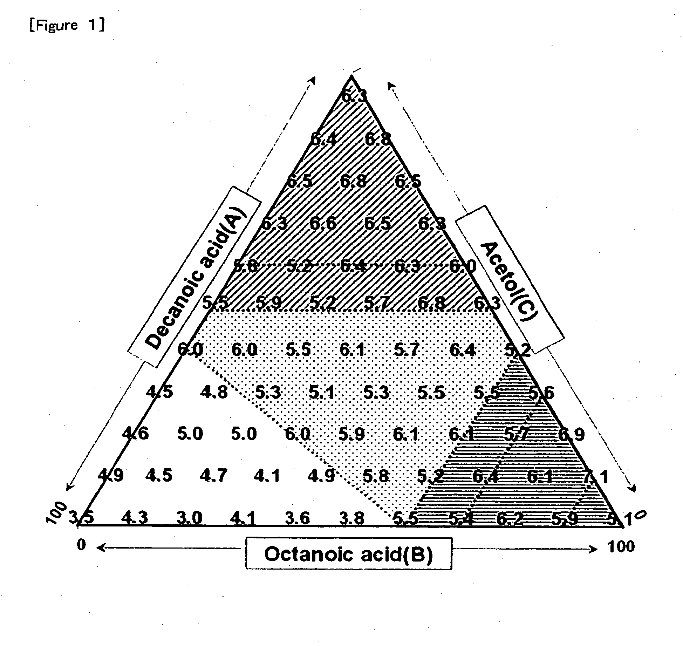

   Figure 1 is a ternary plot indicating the results of the organoleptic evaluation in a soup system attributable to the difference in the ratio of each formulated product of an aroma and/or flavor imparting composition containing any of decanoic acid, octanoic acid and acetol.
[Figure 2]

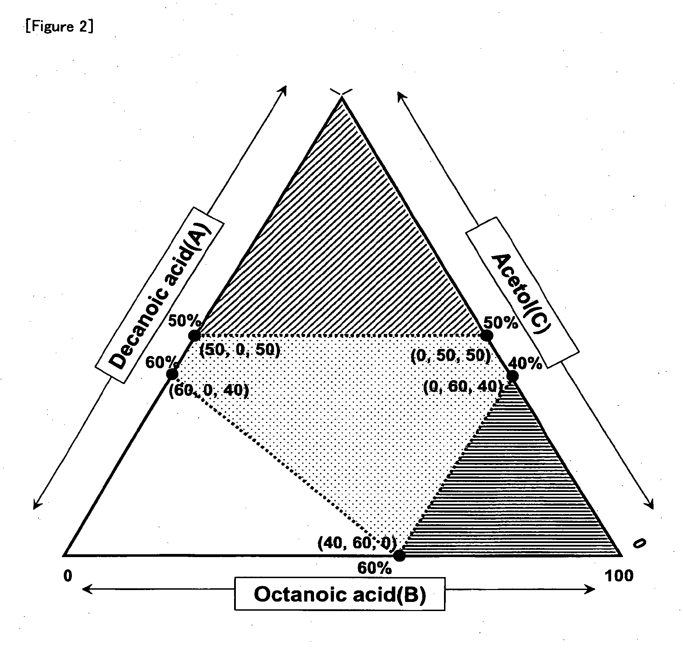

   Figure 2 is a simplified view of a ternary plot indicating the results of the organoleptic evaluation in a soup system attributable to the difference in the ratio of each formulated product of an aroma and/or flavor imparting composition containing any of decanoic acid, octanoic acid and acetol.

### [Description of Embodiments]

The present inventors first prepared a meat soup stock by an ordinary method, and the meat soup stock was then subjected to an identification of important aroma components. Specifically, a vacuum distillant of a diethyl ether extract of a meat stock soup was prepared and subjected majorly to a gas chromatography - sniffing method, thereby attempting to identify the components.

As a result of an intensive study, the present inventors discovered that, for the contributing compoments of a meat soup stock involve, instead of collecting the compoments present at a highest concentration based on the analytical values shown in Non-patent literatures, the aroma compoments of (i) decanoic acid, (ii) octanoic acid and (iii) acetol, among many compoments, are responsible. Nevertheless, when the three compoments described above were quantified by a gas chromatography - mass spectrometry (GC-MS) and the quantification results were employed in an attempt to reproduce a meat soup stock such as a chicken or a pork soup stock in the form of an aqueous solution or a meat soup or extract, the aroma was far different from the original meat soup stock.

Accordingly, as a result of a further intensive study, the present inventors discovered that this problem can be solved by rather changing the ratio of (i) the decanoic acid, (ii) the octanoic acid and (iii)the acetol from the contents in the meat soup stock rather than reproducing the contents of (i) the decanoic acid, (ii) the octanoic acid and (iii) the acetol, and finally established the present invention based on such a finding. -

It was further discovered, as a result of an intensive study on a compound having an aroma and/or a flavor similar to that of the acetol, that several furan ring-carrying compounds have the effects similar to that of the acetol. As used herein, a furan ring compound is any of furfural, methyltetrahydrofuranone and 2-acetyl-5-methylfuran.

As used herein, an aroma means a scent sensed only by a nose without an eating or drinking behavior (orthonasal flavor). Also as used herein, a flavor means a scent entering the nose from an oral cavity upon eating or drinking behavior (retronasal flavor).

In the present description, an addition to a beverage/food product to be imparted with an aroma and/or flavor should be made in such a manner that:
any of (i) decanoic acid, (ii) octanoic acid and (iii) any one or more of acetol, furfural, methyltetrahydrofuranone and 2-acetyl-5-methylfuran is contained, and the ratios of (i) decanoic acid, (ii) octanoic acid and (iii) total of acetol, furfural, methyltetrahydrofuranone and 2-acetyl-5-methylfuran, when the amount of the decanoic acid to be incorporated is A parts by weight, the amount of the octanoic acid to be incorporated is B parts by weight and the total amount of acetol, furfural, methyltetrahydrofuranone and 2-acetyl-5-methylfuran to be incorporated is C parts by weight and also when a calculation is made to give A+B+C=100, become 0≤A≤60, 0≤B≤100, 0≤C≤100, 3A+B≤180. A greater departure from this concentration range gives a greater undesirable irritating odor. An incorporation ratio within the range of 0≤A≤60, 0≤B≤90, 0≤C≤100 gives a preferable result due to a more intense potency and improved meat-like long-lastingness and body. Also an incorporation ratio of 0≤A≤50, 0≤B≤50, 50≤C≤100 gives a preferable result due to a more intense potency and improved meat-like long-lastingness and body. Moreover, an incorporation ratio of 0≤A≤40, 0≤B≤40, 60≤C≤100 gives a further preferable result due to further improved meat-like long-lastingness and body. Furthermore, an incorporation ratio of 0≤A≤40, 60≤B≤100, 0≤C≤40 gives a preferable result due to a more intense potency and improved meat-like mellowness and body. Moreover, an incorporation ratio of 0≤A≤40, 60≤B≤90, 0≤C≤40 gives a further preferable result due to a more intense potency and further improved meat-like mellowness and body. Moreover, an incorporation ratio of 0≤A≤30, 70≤B≤100, 0≤C≤30 gives a further preferable result due to further improved meat-like mellowness and body. Moreover, an incorporation ratio of 0≤A≤30, 70≤B≤90, 0≤C≤30 gives a further preferable result due to further improved meat-like mellowness and body. By adding the aforementioned components to a food/beverage product in any of the aforementioned incorporation ratios, an effectiveness in adding to the food/beverage product an aroma and/or flavor, especially a meat soup stock-like aroma and /or flavor and in improving the aroma and/or flavor quality of the entire food/beverage product can be realized.

An aroma and/or flavor imparting composition as disclosed herein is characterized in that it is an aroma and/or flavor imparting composition in which any of (i) decanoic acid, (ii) octanoic acid and (iii) any one or more of acetol, furfural, methyltetrahydrofuranone and 2-acetyl-5-methylfuran is contained, and the ratios of (i) decanoic acid, (ii) octanoic acid and (iii) total of acetol, furfural, methyltetrahydrofuranone and 2-acetyl-5-methylfuran, when the amount of the decanoic acid to be incorporated is A parts by weight, the amount of the octanoic acid to be incorporated is B parts by weight and the total amount of acetol, furfural, methyltetrahydrofuranone and 2-acetyl-5-methylfuran to be incorporated is C parts by weight and also when a calculation is made to give A+B+C=100, become 0≤A≤60, 0≤B≤100, 0≤C≤100, 3A+B≤180. A greater departure from this concentration range gives a greater undesirable irritating odor. An incorporation ratio within the range of 0≤A≤60, 0≤B≤90, 0≤C≤100 gives a preferable result due to a more intense potency and improved meat-like long-lastingness and body. Moreover, an incorporation ratio of 0≤A≤50, 0≤B≤50, 50≤C≤100 gives a preferable result due to a more intense potency and improved meat-like long-lastingness and body. Moreover, an incorporation ratio of 0≤A≤40, 0≤B≤40, 60≤C≤100 gives a further preferable result due to further improved meat-like long-lastingness and body. Furthermore, an incorporation ratio of 0≤A≤40, 60≤B≤100, 0≤C≤40 gives a preferable result due to a more intense potency and improved meat-like mellowness and body. Moreover, an incorporation ratio of 0≤A≤40, 60≤B≤90, 0≤C≤40 gives a further preferable result due to further improved meat-like mellowness and body. Moreover, an incorporation ratio of 0≤A≤30, 70≤B≤100, 0≤C≤30 gives a further preferable result due to further improved meat-like mellowness and body. Moreover, an incorporation ratio of 0≤A≤30, 70≤B≤90, 0≤C≤30 gives a further preferable result due to further improved meat-like mellowness and body. By adding the aroma and/or flavor imparting composition of the present description to a food/beverage product, an effectiveness in adding to the food/beverage product an aroma and/or flavor, especially a meat soup stock-like aroma and /or flavor and also in improving the aroma and/or flavor quality of the entire food/beverage product can be realized.

It was revealed that generally one, preferably two, more preferably three components of (i) decanoic acid, (ii) octanoic acid and (iii) any one or more of acetol, furfural, methyltetrahydrofuranone and 2-acetyl-5-methylfuran is contained for an excellent organoleptic performance. In the results of Examples of the present invention, it was revealed that every range of a certain value gives a better result when the range does not include the marginal values such as those expressed by "more than" and "less than" (i.e."<") than when the range includes the marginal values such as those expressed by "or more" and "or less" (i.e. "≤").

While among (iii) acetol, furfural, methyltetrahydrofuranone and 2-acetyl-5-methylfuran, any component may be contained, when calculating the incorporation ratios of (i), (ii) and (iii), the total of the components assigned to (iii) should be calculated.

The three components contained for example in a pork meat, when the amount of (i) to be incorporated is A parts by weight, the amount of (ii) to be incorporated is B parts by weight and the total amount of (iii) to be incorporated is C parts by weight, and also when a calculation is made to give A+B+C=100, were also revealed to be 60<A<100, 0<B<40, 0<C<40, 3A+B>180.

As used herein, decanoic acid is a straight-chained fatty acid having 10 carbon atoms, and has a common name capric acid. Octanoic acid is a straight-chained fatty acid having 8 carbon atoms and has a common name caprylic acid. Acetol is a compound having one ketone group and one hydroxy group, and also has other common names hydroxyacetone, 1-hydroxy-2-propanone, pyrvic alcohol and 1-hydroxypropan-2-one.

In the present invention, furfural is a compound having one aldehyde group on a furan ring and called 2-furancarboxyaldehyde under IUPAC nomenclature system. Methyltetrahydrofuranone is a compound having one methyl group and carbonyl group on a furan ring, and called 2-methyltetrahydrofuran-3-one under IUPAC nomenclature system. 2-acetyl-5-methylfuran is a compound having one acetyl group and one methyl group on a furan ring.

It was revealed that in the present invention, by adding any one or more of tetradecanoic acid, hexadecanoic acid, octadecanoic acid and oleic acid to a mixture of (i) decanoic acid, (ii) octanoic acid and (iii) any one or more of acetol, furfural, methyltetrahydrofuranone and 2-acetyl-5-methylfuran, a meat-like long-lastingness and body is further improved whereby giving a further preferable result.

As used herein, tetradecanoic acid is a straight-chained fatty acid having 14 carbon atoms and has a common name myristic acid. Hexadecanoic acid is a straight-chained fatty acid having 16 carbon atoms and has a common name palmitic acid. Octadecanoic acid is a straight-chained fatty acid having 18 carbon atoms and has a common name stearic acid. Oleic acid is a monovalent unsaturated fatty acid having a C18 chain.

In the present invention, the tetradecanoic acid, hexadecanoic acid, octadecanoic acid or oleic acid content in the final food product just before eating is 0.01 to 1000 ppm, preferably 0.1 to 100 ppm. This range is preferable since a lower content makes the effect difficult to be realized. While a higher content may be acceptable, such a higher content does not allow a marked effect to be observed.

In the present invention, it is preferred that one component or two or more components of (i) decanoic acid, (ii) octanoic acid and (iii) any one or more of acetol, furfural, methyltetrahydrofuranone and 2-acetyl-5-methylfuran is contained in a food/beverage product at 10 ppb or more and 1000 ppm or less. Also in view of the ability of exhibiting the meat soup stock-like aroma and/or flavor more potently, a level of 100 ppb or more and 100 ppm or less is preferred. Also in view of the ability of exhibiting the meat soup stock-like aroma and/or flavor more potently, a level of 100 ppb or more and 10 ppm or less is preferred. A level of 10 ppb or less gives a poor effect of the addition, while a level of 1000 ppm or more is not preferable because of a strong irrigative odor.

The starting material for an aroma and/or flavor imparting composition employed in the present invention may be any of those subjected to various processes such as synthetic materials, extracts, fermented materials, heat reaction products of various materials and the like as long as it can be employed in a food/beverage product. Upon using such a starting material for the aroma and/or flavor imparting composition, the manner of the use is not limited particularly and may include a direct addition if the starting material to the aroma and/or flavor imparting composition, an addition after dilution with water or a solvent, an admixing in the form of a yeast extract, meat extract, seafood extract or protein hydrolysate to the aroma and/or flavor imparting composition.

When applying the present invention to a food product, the present invention may be in a form of an aroma and/or flavor imparting composition, or the components (i), (ii) and (iii) may be added directly to the food product. When adding the flavor imparting composition or the components (i), (ii) and (iii) to the food product, it may be in the form including but not limited to a dry powder, paste, solution and the like. It may be added to the food product or seasoning at a time not only before the production of the food product or the seasoning when it is still a starting material, but also during the production, after the completion, immediately before eating, during eating and the like, regardless of which the effect of the aroma and/or flavor imparting, especially a meat soup stock-like aroma and/or flavor imparting can be achieved.

While the food/beverage product to which the aroma and/or flavor is imparted in the present invention is not limited particularly, a marked effect can be observed in a food/beverage material employing a processed meat product and a meat extract, especially a processed pork product and a pork extract, and those which are preferable from a meat soup stock-like aroma and/or flavor imparting and improving point of view typically include a western style cuisine such as a consommé soup, curry, beef stew, white stew, steak, hamburger stake, cutlet and the like, a Chinese style cuisine such as a Chinese soup, fried dumpling, steamed dumpling, fried rice, deep fried chicken and the like, a Japanese style cuisine such as simmered potatoes with sliced beef called "Nikujaga" and simmered root crops with chopped chicken called "Chikuzen-ni", various seasonings such as Worcestershire sauce, demi-glace sauce, ketchup, various dip sauces, a flavor seasoning such as a chicken soup stock, pork soup stock and the like, a cooked rice meal such as a rice ball called "Onigiri" and pilaf.

The present invention is further described in Examples by which the technical scope of the invention is not restricted.

### [Examples]

### (Example 1: Effect of difference in incorporation ratio of aroma and/or flavor imparting composition on organoleptic evaluation in a soup system)

### <Preparation of pork meat soup stock>

A ham meat was boiled preliminarily for 5 minutes while removing the scum to accomplish a pre-treatment. 1.6 kg of the pre-treated ham meat and 10.1 kg of water were placed into a cylindrical container and cooked over a high flame until boiling, and thereafter simmered gently for 4 hours. The scum generated during heating and simmering was removed as needed. After simmering for 4 hours, the broth was filtered through a cocking paper to obtain a pork soup stock.

### <Addition of aroma and /or flavor imparting component to pork meat soup stock in various incorporation ratios>

To the pork meat soup stock prepared in Example 1, three components, namely, decanoic acid, octanoic acid and acetol were added in respective ratios varying at 10% intervals so that the total concentration of the three components became 61.05 ppm. A pork meat soup stock containing none of the three components was used as a control.

The organoleptic evaluation was made by a thoroughly trained 5 special panelists to evaluate the preferability of the aroma and/or flavor of the meat soup stock, while assigning 5 points to the control and 10 points to the maximum and allowing a free comment to be presented. The results are shown in Figure 1.

As evident from Figure 1 and Figure 2 which summarizes Figure 1, it was revealed that, when the amount of the decanoic acid to be incorporated is A parts by weight, the amount of the octanoic acid to be incorporated is B parts by weight and the amount of acetol to be incorporated is C parts by weight and also when a calculation is made to give A+B+C=100, a preferable meat soup stock aroma and/or flavor was imparted within the region represented by 0≤A≤60, 0≤B≤100, 0≤C≤100, 3A+B≤180 on a ternary plot shown in Figure 1 or Figure 2 (dotted zone + hatched zone + laterally striped zone in Figure 1 or Figure 2). Also on the ternary plot shown in Figure 1 or Figure 2, a region surrounded by 0≤A≤50, 0≤B≤50, 50≤C≤100 (hatched zone in Figure 1 or Figure 2) was revealed to allow a preferable meat soup stock aroma and/or flavor to be more intense and allow a meat-like long-lastingness and body to be imparted. Moreover, a region surrounded by 0≤A≤40, 0≤B≤40, 60≤C≤100 was revealed to allow a preferable meat soup stock aroma and/or flavor to be more intense and allow a meat-like long-lastingness and body to be imparted more markedly. Furthermore, a region surrounded by 0≤A≤40, 60≤B≤100, 0≤C≤40 (laterally stripped zone in Figure 1 or Figure 2) was revealed to allow a preferable meat soup stock aroma and/or flavor to be more intense and allow a meat-like mellowness and body to be imparted. Moreover, a region surrounded by 0≤A≤40, 60≤B≤90, 0≤C≤40 was revealed to allow a preferable meat soup stock aroma and/or flavor to be more intense and allow a meat-like mellowness and body to be imparted more markedly. Moreover, a region surrounded by 0≤A≤30, 70≤B≤100, 0≤C≤30 was revealed to allow a preferable meat soup stock aroma and/or flavor to be more intense and allow a meat-like mellowness and body to be imparted more markedly. Moreover, a region surrounded by 0≤A≤30, 70≤B≤90, 0≤C≤30 was revealed to allow a preferable meat soup stock aroma and/or flavor to be more intense and allow a meat-like mellowness and body to be imparted more markedly.

It was revealed that generally one, preferably two, more preferably three components of decanoic acid, octanoic acid and acetol or equivalent is contained for an excellent organoleptic performance. In the results of Examples of the present invention, it was revealed that every range of a certain value gives a better result when the range does not include the marginal values such as those expressed by "more than" and "less than" (i.e."<") than when the range includes the marginal values such as those expressed by "or more" and "or less" (i.e."≤"). Accordingly, the ranges in the present invention include its margins in their all marginal regions, but those excluding the margins are also included as more preferable ranges.

### (Example 2: Effect of difference in incorporation concentration of aroma and/or flavor imparting composition on organoleptic evaluation in a soup system)

### <Addition of aroma and/or flavor imparting composition to pork meat soup stock at various concentration>

To the pork meat soup stock prepared as described above, decanoic acid, octanoic acid and acetol in ratios of 10%, 10%, 80% (Formulation 1), respectively, or decanoic acid, octanoic acid and acetol in ratios of 62.6%, 34.7%, 2.7% (Formulation 2), respectively, were added such that the total concentration of the three components became 1 ppb, 10 ppb, 100 ppb, 10 ppm, 1000 ppm and 1%. A pork meat soup stock containing none of the three components was used as a control.

The organoleptic evaluation was made by a thoroughly trained 3 special panelists to evaluate the preferability of the aroma and/or flavor of the meat soup stock, while assigning 5 points to the control and 10 points to the maximum and allowing a free comment to be presented. The results are shown in Table 1.

**[Table 1]**

| Organoleptic evaluation of soup systems having different concentrations of aroma and/or flavor imparting composition | | |
|---|---|---|
| 3 component concentration | Score (formulation 1) | Score (formulation 2) |
| 1 ppb | 5.0 | 3.8 |
| 10 ppb | 5.8 | 3.9 |
| 100 ppm | 6.5 | 3.2 |
| 10 | 6.8 | 2.8 |
| 1000 ppm | 5.8 | 0.3 |
| 1% | 3.0 | 0.3 |
| Control | 5.0 | 5.0 |

Based on the results shown in Table 1, decanoic acid, octanoic acid, acetol incorporated in ratios of 10%, 10%, 80% (Formulation 1), respectively, exhibited a score equal or superior to that of the control when a total concentration of three components was 1 ppb to less than 1%, and a more preferable meat soup stock aroma and/or flavor was obtained at 10 ppb to 1000 ppm. It was also revealed that a concentration of 100 ppb to 10 ppm was further preferred. A concentration less than 1 ppb exhibited no apparent effect of the addition, while a concentration of 1% or more exhibited a peculiar flavor such as an irritating odor because the addition was excessive. When decanoic acid, octanoic acid, and acetol incorporated in ratios of 62.6%, 34.7% and 2.7% (Formulation 2), respectively, no preferable meat soup stock aroma and/or flavor was obtained at any total concentration of the three components within the range of 1 ppb to 1%. A concentration of 100 ppb or more exhibited a peculiar flavor such as a smell of a soap because the addition was excessive.

### (Example 3: Evaluation of furan ring compound incorporation)

### <Preparation of meat-based flavor seasoning>

Starting materials for a food were mixed in an incorporation ratio indicated in Table 2 shown below to produce a powdery meat-based flavor seasoning. These starting materials for a food were all commercially available products.

**[Table 2]**

| | Incorporation ratio |
|---|---|
| Salt | 40 |
| Sodium glutamate | 35 |
| Sugar | 20 |
| Meat extract | 4 |
| Inosinic acid | 1 |

### <Addition of furan ring compound-containing flavor composition to meat-based flavor seasoning>

1.3 g of the meat-based flavor seasoning shown in Table 2 was dissolved in 98.7g of warm water to produce a 1.3% meat-based flavor seasoning. To this, (i) decanoic acid, (ii) octanoic acid and (iii) any one of acetol, furfural, methyltetrahydrofuranone and 2-acetyl-5-methylfuran, in ratios of (i) 8%, (ii) 8%, (iii) 84% (Formulation 1), respectively, or in ratios of (i) 31%, (ii) 49%, (iii) 20% (Formulation 2), respectively, or in ratios of (i) 80%, (ii) 10%, (iii) 10% (Formulation 3), respectively, were added such that the total concentration of the three components (i), (ii) and (iii) became 61.05 ppm. A meat-based flavor seasoning containing none of the three components was used as a control.

The organoleptic evaluation was made by a thoroughly trained 2 special panelists to evaluate the preferability of the aroma and/or flavor of the meat soup stock, while assigning 5 points to the control and 10 points to the maximum and allowing a free comment to be presented. The results are shown in Table 3.

**[Table 3]**

| Organoleptic evaluation of flavor compositions having difference in (iii) acetol, furfural, methyltetrahydrofuranone and 2-acetyl-5-methylfuran | | | |
|---|---|---|---|
| Component (iii) | Formulation 1 | Formulation 2 | Formulation 3 |
| Acetol | 7.0 | 5.8 | 2.5 |
| Furfural | 6.5 | 5.5 | 2.5 |
| Methyltetrahydrofuranone | 6.5 | 5.5 | 2.0 |
| 2-acetyl-5-methylfuran | 5.8 | 5.3 | 2.0 |

Based on the results shown in Table 3, (i) decanoic acid, (ii) octanoic acid and (iii) any one or more of acetol, furfural, methyltetrahydrofuranone and 2-acetyl-5-methylfuran incorporated in ratios of (i) 8%, (ii) 8%, (iii) 84% (Formulation 1), respectively, imparted an especially preferred meat soup stock aroma and/or flavor, with the components other than acetol exhibiting scores not less than that of the control similarly to acetol. (i) Decanoic acid, (ii) octanoic acid and (iii) any one or more of acetol, furfural, methyltetrahydrofuranone and 2-acetyl-5-methylfuran incorporated in ratios of (i) 31%, (ii) 49%, (iii) 20% (Formulation 2), respectively, also imparted a preferred meat soup stock aroma and/or flavor, with the components other than acetol exhibiting scores not less than that of the control similarly to acetol. (i) Decanoic acid, (ii) octanoic acid and (iii) any one or more of acetol, furfural, methyltetrahydrofuranone and 2-acetyl-5-methylfuran incorporated in ratios of (i) 80%, (ii) 10%, (iii) 10% (Formulation 3), respectively, exhibited a peculiar flavor such as an irritating odor and failed to impart a preferred meat soup stock aroma and/or flavor, with the components other than acetol exhibiting scores less than that of the control similarly to acetol.

### (Example 4: Evaluation of addition of tetradecanoic acid, hexadecanoic acid, octadecanoic acid and oleic acid)

### <Addition of flavor compositions containing tetradecanoic acid, hexadecanoic acid, octadecanoic acid and oleic acid to meat-based flavor seasoning>

Similarly to Example 3, 1.3 g of the meat-based flavor seasoning shown in Table 2 was dissolved in 98.7 g of warm water to produce a 1.3% meat-based flavor seasoning. To this, (i) decanoic acid, (ii) octanoic acid, (iii) acetol in ratios of (i) 11%, (ii) 2%, (iii) 87%, respectively, were added so that the total concentration became 13.8 ppm to obtain a base seasoning solution. To the base seasoning solution, any of tetradecanoic acid (final concentration: 10.1 ppm), hexadecanoic acid (final concentration: 5.95 ppm), octadecanoic acid (final concentration: 0.90 ppm) or oleic acid (final concentration: 2.30 ppm) was added at the respective final concentration. A meat-based-flavor seasoning containing none of the three components (i), (ii) and (iii) was used a control.

The organoleptic evaluation was made by a thoroughly trained 4 special panelists to evaluate the preferability of the aroma and/or flavor of the meat soup stock, while assigning 5 points to the control and 10 points to the maximum and allowing a free comment to be presented. The results are shown in Table 4.

**[Table 4]**

| Organoleptic evaluation of flavor compositions containing tetradecanoic acid or hexadecanoic acid, octadecanoic acid, oleic acid | |
|---|---|
| Formulation | Score |
| Control (Meat-based flavor seasoning solution) | 5.0 |
| Base seasoning solution (Control + (i) decanoic acid + (ii) octanoic acid + (iii) acetol) | 7.0 |
| Base seasoning solution + tetradecanoic acid | 8.6 |
| Base seasoning solution + hexadecanoic acid | 8.4 |
| Base seasoning solution + octadecanoic acid | 8.3 |
| Base seasoning solution + oleic acid | 8.1 |

Based on the results shown in Table 4, when the base seasoning solution(= meat-based flavor seasoning solution containing (i) decanoic acid, (ii) octanoic acid, (iii) acetol) was supplemented with tetradecanoic acid, hexadecanoic acid, octadecanoic acid or oleic acid at a given concentration, a score not less than those of the control and the base seasoning solution was exhibited, and a further preferable meat soup stock aroma and/or flavor was imparted.

### [Industrial Applicability]

The present invention relates to a method for imparting an aroma and/or flavor to a food/beverage product.

## Claims

1. A method for producing a beverage/food product having an improved meat aroma and/or flavor by adding (i) decanoic acid, (ii) octanoic acid and (iii) any one or more of acetol, furfural, methyltetrahydrofuranone and 2-acetyl-5-methylfuran, wherein when the amount of (i) the decanoic acid to be incorporated is A parts by weight, the amount of (ii) the octanoic acid to be incorporated is B parts by weight and the total amount of (iii) acetol, furfural, methyltetrahydrofuranone and 2-acetyl-5-methylfuran to be incorporated is C parts by weight and also when a calculation is made to give A+B+C=100, then the addition to the beverage/food product is conducted to give a formulation shown by any of the following (a), (b), (c), (d) and (e):
(a) 0≤A≤60, 0<B<100, 0<C<100, 3A+B≤180
(b) 0<A≤60, 0<B≤90, 0<C<100, 3A+B≤180
(c) 0<A≤50, 0<B≤50, 50≤C<100
(d) 0<A≤40, 60≤B<100, 0<C≤40
(e) 0<A≤40, 60≤B≤90, 0<C≤40.

2. The method according to Claim 1 wherein any one or more of tetradecanoic acid, hexadecanoic acid, octadecanoic acid and oleic acid are added.

3. The method according to Claim 1 or 2 wherein the total amount of (i) decanoic acid, (ii) octanoic acid, and (iii) any one or more of acetol, furfural, methyltetrahydrofuranone and 2-acetyl-5-methylfuran is 10 ppb or more and 1000 ppm or less.

4. A meat aroma and/or flavor imparting composition containing (i) decanoic acid, (ii) octanoic acid and (iii) any one or more of acetol, furfural, methyltetrahydrofuranone and 2-acetyl-5-methylfuran, wherein when the amount of (i) the decanoic acid to be incorporated is A parts by weight, the amount of (ii) the octanoic acid to be incorporated is B parts by weight and the total amount of (iii) acetol, furfural, methyltetrahydrofuranone and 2-acetyl-5-methylfuran to be incorporated is C parts by weight and
also when a calculation is made to give A+B+C=100, then the addition to the beverage/food product is conducted to give a formulation shown by any of the following (a), (b), (c), (d) and (e):
(a) 0<A≤60, 0<B<100, 0<C<100, 3A+B≤180
(b) 0<A≤60, 0<B≤90, 0<C<100, 3A+B≤180
(c) 0<A≤50, 0<B≤50, 50≤C<100
(d) 0<A≤40, 60≤B<100, 0<C≤40
(e) 0<A≤40, 60≤B≤90, 0<C≤40.

5. The composition according to Claim 4 wherein any one or more of tetradecanoic acid, hexadecanoic acid, octadecanoic acid and oleic acid are further contained.

6. A food product comprising a composition according to Claim 4 or 5 wherein the total amount of (i) decanoic acid, (ii) octanoic acid and (iii) any one or more of acetol, furfural, methyltetrahydrofuranone and 2-acetyl-5-methylfuran is 10 ppb or more and 1000 ppm or less.

7. A method for improving a meat aroma and/or a flavor of a food product by adding the composition according to Claim 4 or 5 wherein the total amount of (i) decanoic acid, (ii) octanoic acid, and (iii) any one or more of acetol, furfural, methyltetrahydrofuranone and 2-acetyl-5-methylfuran in the food product is 10 ppb or more and 1000 ppm or less.

8. A method for producing a food product having an improved meat aroma and/or flavor by adding the composition according to Claim 4 or 5 wherein the total amount of (i) decanoic acid, (ii) octanoic acid, and (iii) any one or more of acetol, furfural, methyltetrahydrofuranone and 2-acetyl-5-methylfuran in the food product is 10 ppb or more and 1000 ppm or less.

## Patentansprüche

1. Verfahren zum Herstellen eines Getränke-/Lebensmittelprodukts mit einem verbesserten Fleischaroma und/oder Geschmack durch Zugeben von (i) Decansäure, (ii) Octansäure und (iii) einer oder mehreren unter Acetol, Furfural, Methyltetrahydrofuranon und 2-Acetyl-5-methylfuran ausgewählten Verbindungen, wobei die Menge der (i) einzuverleibenden Decansäure A Gewichtsteile ist, die Menge der (ii) einzuverleibenden Octansäure B Gewichtsteile ist und die Gesamtmenge von (iii) einzuverleibendem Acetol, Furfural, Methyltetrahydrofuranon und 2-Acetyl-5-methylfuran C Gewichtsteile ist, und wenn die Berechnung A+B+C=100 ergibt, wird die Zugabe zu dem Getränke-/Lebensmittelprodukt so durchgeführt, dass eine Formulierung erhalten wird, die einer der folgenden Bedingungen (a), (b), (c), (d) und (e) entspricht:
(a) 0<A≤60, 0<B<100, 0<C<100, 3A+B≤180
(b) 0<A≤60, 0<B≤90, 0<C<100, 3A+B≤180
(c) 0<A≤50, 0<B≤50, 50≤C<100
(d) 0<A≤40, 60≤B<100, 0<C≤40
(e) 0<A≤40, 60≤B≤90, 0<C≤40.

2. Verfahren nach Anspruch 1, wobei eine oder mehrere unter Tetradecansäure, Hexadecansäure, Octadecansäure und Oleinsäure ausgewählte Säuren zugegeben werden.

3. Verfahren nach Anspruch 1 oder 2, wobei die Gesamtmenge von (i) Decansäure, (ii) Octansäure und (iii) einer oder mehreren unter Acetol, Furfural, Methyltetrahydrofuranon und 2-Acetyl-5-methylfuran ausgewählten Verbindungen 10 ppb oder mehr und 1000 ppm oder weniger ist.

4. Fleischaroma und/oder Geschmack verbessernde Zusammensetzung, die (i) Decansäure, (ii) Octansäure und (iii) eine oder mehrere unter Acetol, Furfural, Methyltetrahydrofuranon und 2-Acetyl-5-methylfuran ausgewählte Verbindungen enthält, wobei, wenn die Menge von (i) der einzuverleibenden Decansäure A Gewichtsteile ist, die Menge der (ii) einzuverleibenden Oktansäure B Gewichtsteile ist und die Gesamtmenge von (iii) Acetol, Furfural, Methyltetrahydrofuranon und 2-Acetyl-5-methylfuran C Gewichtsteile ist,
und wenn die Berechnung A+B+C=100 ergibt, wird die Zugabe zu dem Getränke-/Lebensmittelprodukt so durchgeführt, dass eine Formulierung erhalten wird, die eine der folgenden Bedingungen (a), (b), (c), (d) und (e) erfüllt:
(a) 0<A≤60, 0<B<100, 0<C<100, 3A+B≤180
(b) 0<A≤60, 0<B≤90, 0<C<100, 3A+B≤180
(c) 0<A≤50, 0<B≤50, 50≤C<100
(d) 0<A≤40, 60≤B<100, 0<C≤40
(e) 0<A≤40, 60≤B≤90, 0<C≤40.

5. Zusammensetzung nach Anspruch 4, wobei außerdem eine oder mehrere unter Tetradecansäure, Hexadecansäure, Octadecansäure und Oleinsäure ausgewählte Säuren enthalten sind.

6. Lebensmittelprodukt, das eine Zusammensetzung nach Anspruch 4 oder 5 umfasst, wobei die Gesamtmenge von (i) Decansäure, (ii) Octansäure und (iii) einer oder mehreren unter Acetol, Furfural, Methyltetrahydrofuranon und 2-Acetyl-5-methylfuran ausgewählten Verbindungen 10 ppb oder mehr und 1000 ppm oder weniger ist.

7. Verfahren zum Verbessern eines Fleischaromas und/oder Geschmacks eines Lebensmittelprodukts durch Zugeben der Zusammensetzung nach Anspruch 4 oder 5, wobei die Gesamtmenge von (i) Decansäure, (ii) Octansäure und (iii) einer oder mehreren unter Acetol, Furfural, Methyltetrahydrafuranon und 2-Acetyl-5-methylfuran ausgewählten Verbindungen in dem Lebensmittelprodukt 10 ppb oder mehr und 1000 ppm oder weniger ist.

8. Verfahren zum Herstellen eines Lebensmittelprodukts mit einem verbesserten Fleischaroma und/oder Geschmack durch Zugeben der Zusammensetzung nach Anspruch 4 oder 5, wobei die Gesamtmenge von (i) Decansäure, (ii) Oktansäure und (iii) einer oder mehreren unter Acetol, Furfural, Methyltetrahydrofuranon und 2-Acetyl-5-methylfuran ausgewählten Verbindungen in dem Lebensmittelprodukt 10 ppb oder mehr und 1000 ppm oder weniger ist.

## Revendications

1. Procédé pour produire un produit de type boisson/alimentaire ayant un arôme et/ou une saveur de viande amélioré par addition (i) d'acide décanoïque, (ii) d'acide octanoïque et (iii) de l'un quelconque ou plusieurs de acétol, furfural, méthyltétrahydrofuranone et 2-acétyl-5-méthylfurane, où quand la quantité de (i) l'acide décanoïque à incorporer est A parties en poids, la quantité de (ii) l'acide octanoïque à incorporer est B parties en poids et la quantité totale de (iii) acétol, furfural, méthyltétrahydrofuranone et 2-acétyl-5-méthylfurane à incorporer est C parties en poids et aussi quand un calcul est fait pour donner A+B+C=100, l'addition au produit de type boisson/alimentaire est réalisée pour donner une formulation illustrée par l'un quelconque des (a), (b), (c), (d) et (e) suivants :
(a) 0<A≤60, 0<B<100, 0<C<100, 3A+B≤180
(b) 0<A≤60, 0<B≤90, 0<C<100, 3A+B≤180
(c) 0<A≤50, 0<B≤50, 50≤C<100
(d) 0<A≤40, 60≤B<100, 0<C≤40
(e) 0<A≤40, 60≤B≤90, 0<C≤40.

2. Procédé selon la revendication 1, où l'un quelconque ou plusieurs de l'acide tétradécanoïque, l'acide hexadécanoïque, l'acide octadécanoïque et l'acide oléique sont ajoutés.

3. Procédé selon la revendication 1 ou 2, où la quantité totale de (i) acide décanoïque, (ii) acide octanoïque et (iii) l'un quelconque ou plusieurs de acétol, furfural, méthyltétrahydrofuranone et 2-acétyl-5-méthylfurane est 10 ppb ou plus et 1 000 ppm ou moins.

4. Composition conférant un arôme et/ou une saveur de viande contenant (i) de l'acide décanoïque, (ii) de l'acide octanoïque et (iii) l'un quelconque ou plusieurs de acétol, furfural, méthyltétrahydrofuranone et 2-acétyl-5-méthylfurane, où quand la quantité de (i) l'acide décanoïque à incorporer est A parties en poids, la quantité de (ii) l'acide octanoïque à incorporer est B parties en poids et la quantité totale de (iii) acétol, furfural, méthyltétrahydrofuranone et 2-acétyl-5-méthylfurane à incorporer est C parties en poids et
aussi quand un calcul est fait pour donner A+B+C=100, l'addition au produit de type boisson/alimentaire est réalisée pour donner une formulation illustrée par l'un quelconque des (a), (b), (c), (d) et (e) suivants :
(a) 0<A≤60, 0<B<100, 0<C<100, 3A+B≤180
(b) 0<A≤60, 0<B≤90, 0<C<100, 3A+B≤180
(c) 0<A≤50, 0<B≤50, 50≤C<100
(d) 0<A≤40, 60≤B<100, 0<C≤40
(e) 0<A≤40, 60≤B≤90, 0<C≤40.

5. Composition selon la revendication 4 où l'un quelconque ou plusieurs de l'acide tétradécanoïque, l'acide hexadécanoïque, l'acide octadécanoïque et l'acide oléique sont contenus en outre.

6. Produit alimentaire comprenant une composition selon la revendication 4 ou 5, où la quantité totale de (i) acide décanoïque, (ii) acide octanoïque et (iii) l'un quelconque ou plusieurs de acétol, furfural, méthyltétrahydrofuranone et 2-acétyl-5-méthylfurane est 10 ppb ou plus et 1 000 ppm ou moins.

7. Procédé pour améliorer un arôme et/ou une saveur de viande d'un produit alimentaire par addition de la composition selon la revendication 4 ou 5 où la quantité totale de (i) acide décanoïque, (ii) acide octanoïque et (iii) l'un quelconque ou plusieurs de acétol, furfural, méthyltétrahydrofuranone et 2-acétyl-5-méthylfurane dans le produit alimentaire est 10 ppb ou plus et 1 000 ppm ou moins.

8. Procédé pour produire un produit alimentaire ayant un arôme et/ou une saveur de viande amélioré par addition de la composition selon la revendication 4 ou 5, où la quantité totale de (i) acide décanoïque, (ii) acide octanoïque et (iii) l'un quelconque ou plusieurs de acétol, furfural, méthyltétrahydrofuranone et 2-acétyl-5-méthylfurane dans le produit alimentaire est 10 ppb ou plus et 1 000 ppm ou moins.
